# EUROPEAN PATENT SPECIFICATION

(11) **EP 1 195 923 B1**
(45) Date of publication and mention of the grant of the patent: **20.05.2009**
(21) Application number: 01121920.1
(22) Date of filing: 12.09.2001
(51) Int. Cl.: H04L 12/56, H04B 7/26, H04L 29/06

(54) **Transmitting device having radio link control layer in a radio communication system and a data transmitting method in the same**
Sendevorrichtung mit einer Funkverbindungssteuerungsschicht in einem Funkkommunikationssystem und entsprechendes Datenübertragungsverfahren
Dispositif de transmission ayant une couche de commande de liaison radio dans un système de radiocommunication et méthode de transmission de données correspondante

(30) Priority: 07.10.2000 KR 2000059015; 07.10.2000 KR 2000059016
(43) Date of publication of application: 10.04.2002
(73) Proprietor: LG ELECTRONICS, INC., Seoul (KR)
(72) Inventor: Yi, Seung June, Kangnam-gu, Seoul (KR)
(74) Representative: Urner, Peter

(56) References cited:
- WO-A-00/21253
- H. HOLMA AND A. TOSKALA: "WCDMA for UMTS - Chapter 7 Radio Interface Protocols" JOHN WILEY &SONS, LTD, 2000, pages 121-142, XP002266796
- "3rd Generation Partnership Project; Technical Specification Group Radio Access Network; RLC protocol specification (Release 1999) (3GPP TS 25.322 V3.3.0 (2000-06)" 3GPP TECHNICAL SPECIFICATION, [Online] June 2000 (2000-06), pages 1-28, XP002266974 Retrieved from the Internet: <URL:http://www.3gpp.org/ftp/Specs/html-in fo/25322.htm> [retrieved on 2004-01-12]

## Description

### BACKGROUND OF THE INVENTION

### Field of the Invention

The present invention relates to a transmitting device having a radio link control (RLC) layer in a radio communication system and a data transmitting method in the same.

### Background of the Related Art

Many efforts are made to develop and study communication technology admitting multimedia access without spatiotemporal limitations.

The developments of digital data processing and transmission technology enable to realize a real-time global data communication system using satellites and the combined wireless and wire communications lately.

Thus, such developments of digital data processing and transmission technology enables to gain access to information freely regardless of voice communication, still image based on networks, real-time transmission of moving pictures through wire or wireless communication means.

IMT-2000 will be one of them.

An RLC layer is the second layer of 3GPP as a protocol layer controlling data links corresponding to the second layer of OSI 7-layered model. And, RLC species used in 3GPP are mainly divided into Tr(transparent) mode to which no RLC header is added and NTR(non-transparent mode) to which RLC header is added.

NTr mode is subdivided into UM mode (unacknowledged mode) having no ACK(acknowledgement) signal from a receive stage and AM mode(acknowledged mode) having an ACK signal from the receive stage.

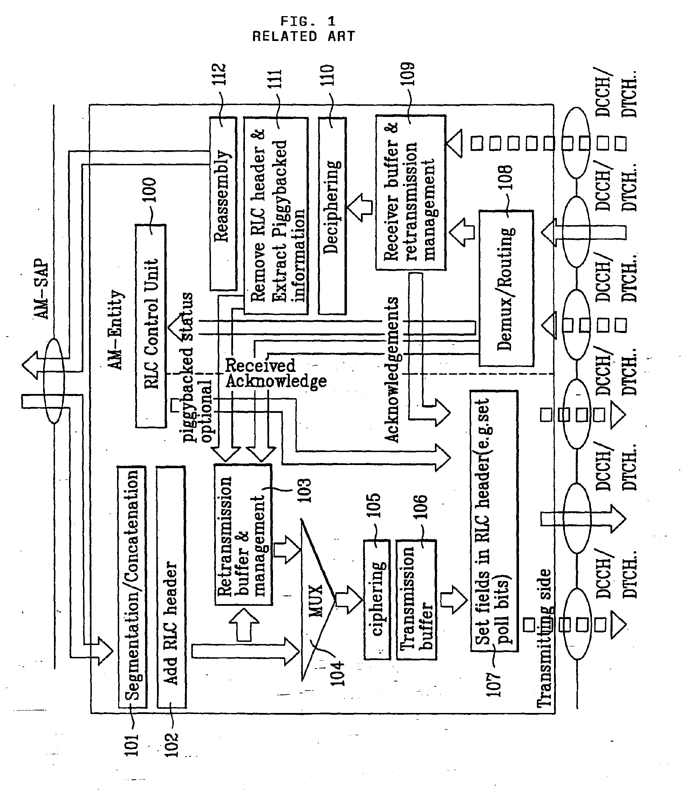

Therefore, RLC presently uses three modes of Tr, UM, and AM, in which AM entity structure is shown FIG. 1.

FIG. 1 illustrates a block diagram of RLC AM entity structure according to a related art. Referring to FIG. 1, in AM entity of a transmitting side, segmentation and concatenation are carried out through a block 101 so as to change SDUs(service data units) stepping down from an upper layer into uniform-sized protocol data units(PDUs) and headers containing sequence numbers SN are added to PDUs through a block 102.

PDU to which the header is added is transmitted downward as well as stored in a retransmission buffer 103 for a later use such as retransmission which may occur in future. The PDU flown down through a multiplexer 104 under goes a ciphering through a block 105 for data security and then is temporarily stored in a transmission buffer 106 so as to be transmitted to a set fields block 107.

In the set field block 107, other fields such as DC and poll field and the like except the sequence number SN of the RLC header are set and then transmitted to another AM entity corresponding to a receiving side.

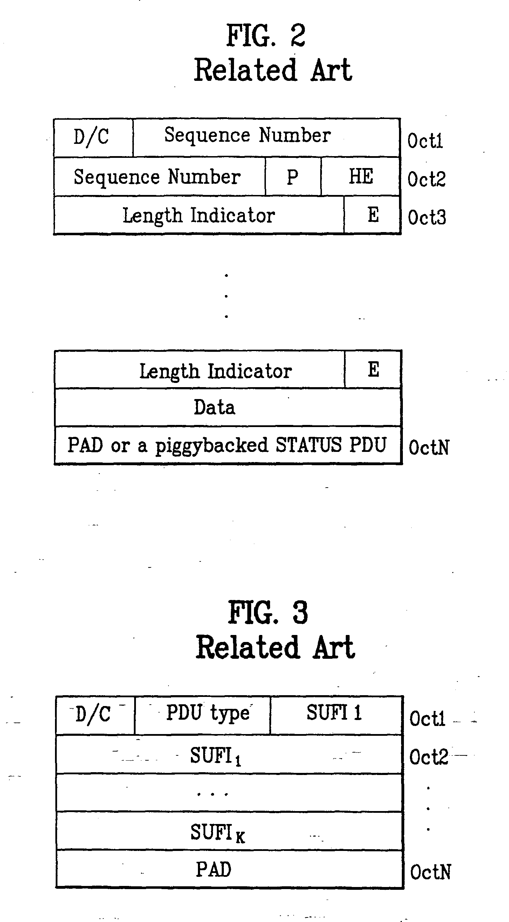

Such a PDU carrying data stepping down from an upper layer is called AMD(AM data) PDU of which structure is shown in FIG. 2. FIG. 2 illustrates a structure of AMD PDU.

In this case, format of the AMD PDU is constructed with a header and LI(length indicator) group, data, and PAD(padding) or piggybacked status PDU.

The header includes a sequence number as a field representing the order numbers of the respective AMP PDUs, an 1-bit D/C field informing whether the corresponding AMD PDU carries data information or control information, an 1-bit polling field(P field) asking a receiving side of a status report, a 2-bit HE(header extension) field informing whether next data are data or LI and E bit, and an 1-bit E (extension) field informing whether a next field is data or LI and E bit.

The LI part in the AMD PDU is constructed with LI and E bit, in which LI is a field indicating boundaries of the respective SDUs when the PDU includes a plurality of SDUs. Each LI represents an octet count from the first octet of the data part to the last octet of the respective SDUs, and the respective LIs for the SDUs included in the PDU are called the LI group.

The data part including at least one SDU is a field corresponding to the SDUs stepping down from the upper layer. As the size of the data part is variable, padding is carried out so as to octet-align the sizes of the entire PDUs.

The foregoing ciphering is carried out on the AMD PDU. In this case, the first two octets, which are the header part, including the sequence number are not ciphered. Thus, the rest thereof is ciphered.

In the AM entity, control PDU exists as well as the AMD PDU. The control PDU includes a status PDU carrying status information, reset PDU resetting AM entity, and reset ACK PDU informing the acknowledgement(ACK) of the reset PDU.

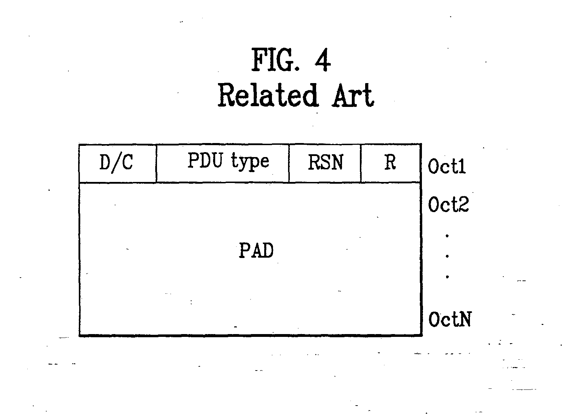

FIG. 3 illustrates a structure of status PDU, and FIG. 4 illustrates a structure of reset ACK PDU for explaining the reset and the reset ACK PDU.

The control PDUs, which are generated from the RLC control unit, are transmitted to the set fields block without undergoing the ciphering, set D/C and PDU type fields, and then transmitted to RLC AM entity corresponding to the receiving side.

Namely, in the set fields block 107, a D/C field is set as 1 for the AMD PDU but as 0 for the control PDU. When there is a vacancy in the AMD PDU failing filled up with data, padding(PAD) is carried out thereon.

When there is such a PAD in the AMD PDU, the set fields block 107 enables to transmit status PDU instead of PAD so as to increase the data transmission efficiency. In this case, the status PDU is called piggybacked status PDU.

As mentioned in the above explanation, the RLC AM entity corresponding to the receiving side receiving PDU of the AM entity which is transmitted from the RLC AM entity - corresponding to the transmitting side processing the AMD PDU in a manner as follows.

First, a demultiplex/routing part 108 checks the D/C field. If a D/C field value is 0, the control PDU is instantly sent upward to the RLC control unit 100 since '0' corresponds to the control PDU. If the D/C field value is 1, the AMD PDU is instantly sent upward to the receiver buffer 109 since '1' corresponds to the AMD PDU.

The RLC AM entity enables to use one or two logical channels for one radio bearer set-up.

In FIG. 1, solid and dotted lines indicate the cases of using one or two logical channels, respectively.

As shown in FIG. 1, data and control channels are determined when two logical channels are used. Therefore, the AMD PDU is immediately transmitted to the receiver buffer 109 and the control PDU is transmitted to the RLC control unit 100 via the demultiplex/routing part 108.

The receiver buffer 109, which checks the receiving statuses of the respective AMD PDUs, asking the transmitting side of retransmission of the not-received PDU by sending an NACK signal to the transmitting side when there is not-received AMD PDU.

The PDUs having been stored in the receiver buffer 109 are stored until all the PDUs constructing a complete SDU are thoroughly received. After receiving all the corresponding PDUs, the receiver buffer 109 sends upward the PDUs by SDU unit.

Thereafter, the PDUs are deciphered by a deciphering part 110, and data are extracted only by removing RLC headers and piggybacked information from the respective PDUs in a block 111. Thus, SDU is constructed with the pure data through the block 111.

Subsequently, the SDU is sent upward to an upper layer through a reassembly part 112.

Unfortunately, the related art has problems in transmitting the AMD PDU as follows.

In order for the transmitting side to transmit the piggybacked status PDU, the set fields block checks whether there exists PAD which the piggybacked status PDU enters in the AMD PDU. When such a PAD the piggybacked status PDU enters exists in the AMD PDU, the AMD PDU has to be replaced by the piggybacked status PDU.

Meanwhile, as the AMD PDU has been ciphered already, the ciphered AMD PDU has to be deciphered in the set fields block in order to know the exact location of the PAD and whether the PAD exists.

Moreover, the ciphered AMD PDU should be deciphered to transmit the AMD PDU, whereby deciphering/ciphering has to be carried out in the set fields block unnecessarily.

Further, as mentioned in the above explanation, RLC AM entity corresponding to the receiving side has to be sent upward from the receiver buffer to the upper layer when the PDUs are sent upward.

In this case, having been ciphered already by the transmitting side, the PDUs stored in the receiver buffer have to be deciphered in order to know whether each of the PDUs belongs to which SDU.

Therefore, the receiver buffer needs a function of deciphering the PDU unnecessarily as well.

As mentioned in the foregoing description, the repeated ciphering/deciphering reduces processing speed and efficiency of the AMD-PDU data and further degrades the system performance.

In functions of the RLC, there is an SDU discard function used for preventing overflow of a buffer.

When this function is used, PDUs corresponding to the SDU to be discarded from the transmitting buffer and the receiver buffer have to be discarded. As all the ciphered PDUs are stored in the transmitting and receiver buffers, the transmitting and receiver buffers require the deciphering function commonly.

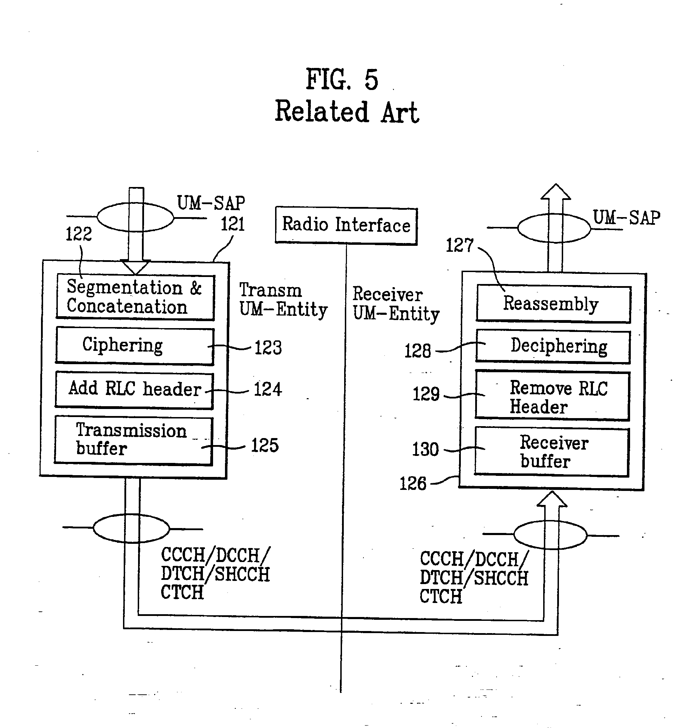

FIG. 5 illustrates a construction of RLC UM entity according to a related art.

Referring to FIG. 5, segmentation and concatenation are carried out through a block 122 so as to change SDUs(service data units) stepping down from an upper layer through UM-SAP into uniform-sized protocol data units(PDUs).

Subsequently, a ciphering part 123 ciphers the PDUs for data security. Then, an RLC header part 124 adds headers containing sequence numbers SN to the PDUs so as to construct UMD(unacknowledged mode data) PDU.

A transmission buffer 125 stores and transmits the UMD PDU to RLC UM entity corresponding to a receiving side.

In an RLC layer, exist UMD PDU(unacknowledged PDU) used when an ACK signal to a transmitting side is not necessary after receiving PDU from a receiving side and AMD PDU(acknowledged PDU) used when the ACK signal is necessary.

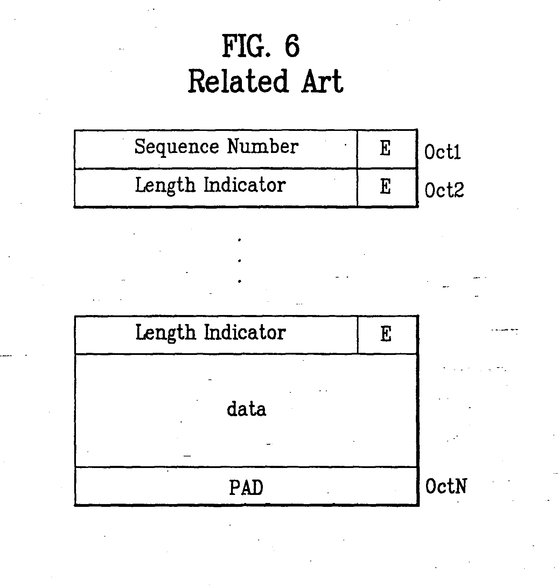

As shown in FIG. 6, format of the AMD PDU is constructed with a header and LI(length indicator) group, data, and PAD (padding) .

The header includes a sequence number as a field representing the order numbers of the respective PDUs and an 1-bit E(extension) field informing whether a next field is data, the LI or extension bit.

The data part including at least one SDU is a field corresponding to the SDUs stepping down from the upper layer. As the size of the data part is variable, padding is carried out so as to octet-align the sizes of the entire PDUs.

In the same manner as the AMD PDU, the LI part in the UMD PDU is constructed with LI and E bit, in which LI is a filed indicating boundaries of the respective SDUs when the PDU includes a plurality of SDUs. Each LI represents an octet count from the first octet of the data part to the last octet of the respective SDUs, and the respective LIs for the SDUs included in the PDU are called the LI group.

As mentioned in the above explanation, a structure of the UMD PDU is equal to that in FIG. 6, in which the first octet is the header including the sequence number and the header is not ciphered. Thus, the rest thereof is ciphered.

RLC UM entity stores the transmitted UMD PDU in the receiver buffer 130. When all the PDUs constructing a complete SDU are thoroughly received, the stored PDUs are transmitted to a block 129 by SDU unit.

Thereafter, the headers of the PDUs are removed in the block 129 and the PDUs are deciphered by a deciphering part 128. Thus, the deciphered PDUs are transmitted to an upper layer through a reassembly part 126.

Unfortunately, the related art has problems in transmitting the UMD PDU using RLC UM entity as follows.

As mentioned in the foregoing description, the PDUs are sent to the upper layer from the receiver buffer by SDU unit. In this case, the PDUs have been ciphered already. Besides, deciphering has to be carried out in order to know that each PDU belongs to which SDU.

Therefore, the receiver buffer needs a deciphering function unnecessarily.

In functions of the RLC, there is an SDU discard function used for preventing overflow of a buffer. When this function is used, PDUs corresponding to the SDU to be discarded from the transmitting and receiver buffers have to be discarded.

As all the ciphered PDUs are stored in the transmitting and receiver buffers, the transmitting and receiver buffers require the deciphering function commonly.
The textbook of H. Holma et al: "WCDMA for UMTS", John Wiley & Sons, Ltd., Chichester, 2000, pages 221 to 142, reprinted June 2000, describes an example data flow through the RLC layer. The example RLC AM entity comprises on the transmitting side means for segmenting and/or concatenating data packets (RLC SDUs) received from a higher layer into payload units (PU) of fixed length. The PUs are placed in a transmission buffer which, in this example, also takes care of retransmission management. RLC AMD PDUs are each constructed by taking one PU from the transmission buffer adding a header for it and if the data in the PU does not fill the whole RLC AMD PDU a PAD-field or piggybacked status message is appended. Next, the RLC AMD data PDU is ciphered, excluding the two first octets of the AM-RLC PDU which comprise the PDU sequence number and the pol bit. After this the PDU is ready to be forwarded to a lower layer, i.e. to the MAC layer via a logical channel DCCH/DTCH.
On the receiving side the RLC AMD entity described by H. Holma et al. includes deciphering means for deciphering RLC PDUs received from a lower layer through at least one of the plurality of channels. After deciphering the whole header is extracted from the RLC PDU resulting in PUs. The PUs are stored in a receiving buffer. Once all payload units belonging to a complete SDU are in the receiving buffer, the SDU is reassembled by corresponding reassembling means from the PUs and thereafter delivered to a higher layer.
WO 00/21253 is concerned with a data segmentation method in a telecommunication system and describes only segmentation and concatenation of SDUs in the RLC layer.
3GPP Standard TS 25.322 V3.3.0 (2000-06) "RLC protocol specification" (release 1999), discloses RLC entities as described in connection with Figures 1 to 6 of this application.

### Summary of the Invention

An object of the present invention is to provide transmitting and receiving devices having an acknowledged mode radio link control layer in a radio communication system enabling to perform the transmission and reception of PDUs, i. e. data PDUs and control PDUs more effectively. A further object is to provide corresponding transmitting and receiving methods.
These objects are achieved by the devices according to claims 1 and 15 as well as by the methods according to claim 8 and 18.
According to the present invention an RLC entity carries out a ciphering step as a final processing step after a transmission buffer, wherein a D/C field check is performed that enables acknowledged mode data PDUs to be ciphered of the PDUs but control PDUs not to be ciphered. Consequently, an RLC entity of the receiving side carries out a deciphering step as a first processing step before a receiver buffer, wherein a D/C field check is performed to judge whether the transmitted and received PDUs are control PDUs or acknowledged mode data PDUs to forward control PDUs directly to a RLC control module without deciphering whereas data PDUs are transmitted to the deciphering means.

A data transmission module according to the present invention includes a transmission data storing module storing PDUs corresponding to SDUs transmitted from a first upper layer and outputting the stored PDUs by SDU unit, a ciphering module ciphering the PDUs stored in the transmission data storing module and transmitting the ciphered PDUs to a second RLC entity, a deciphering module deciphering ciphered PDUs transmitted from a first RLC entity, and a received data storing module storing the deciphered PDUs and outputting the PDUs toward a second upper layer by SDU unit.

Further, in an RLC entity having a transmission buffer, a data processing method in the RLC entity includes the steps of storing SDUs stepping down from a first upper layer in the transmission buffer in PDUs, ciphering the PDUs stored in the transmission buffer, and transmitting the ciphered PDUs to a second RLC entity corresponding to a receiving side.

In an RLC entity having a receiver buffer, a data processing method in the RLC entity includes the steps of receiving and deciphering PDUs received from a first RLC entity corresponding to a transmitting side, storing the deciphered PDUs in the receiver buffer, and reassembling the PDUs stored in the receiver buffer and then transmitting the reassembled data to a second upper layer.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates a block diagram of a radio communication system having an RLC AM entity according to a related art;

FIG. 2 illustrates a structure of AMD PDU;

FIG. 3 illustrates a structure of status PDU;

FIG. 4 illustrates a structure of reset ACK PDU for explaining the reset and the reset ACK PDU;

FIG. 5 illustrates a construction of a radio communication system having an RLC UM entity according to a related art;

FIG. 6 illustrates a structure of UMD PDU;

FIG. 7A illustrates a construction of a radio communication system having an RLC AM entity according to a first embodiment of the present invention;

FIG. 7B illustrates a block diagram of FIG. 7A in detail;

FIG. 8A illustrates a construction of a radio communication system having an RLC UM entity according to a second embodiment of the present invention; -

FIG. 8B illustrates a block diagram of FIG. 8A in detail;

FIG. 8C illustrates a block diagram of another application of FIG. 8A; and

FIG. 8D illustrates a detailed block diagram of FIG. 8C.

### DETAILED DESCRIPTION OF THE PREFERRED EMBODIMENTS

Reference will now be made in detail to the preferred embodiments of the present invention, examples of which are illustrated in the accompanying drawings.
In a data transmission device of a radio communication system having an RLC layer, according to the main feature of the present invention, a transmission data reassembling module reassembles service data units(SDUs) received from an upper layer into protocol data units (PDUs). A header adding module then adds headers of the RLC layer to the PDUs. After that, a transmission data storing module stores the PDUs to which the headers are added. A ciphering module ciphers the PDUs to which the headers are added and then transmits the ciphered PDUs to a lower layer.
In a data receiving device of a radio communication system having an RLC layer, according to the main feature of the present invention, a deciphering module deciphers ciphered PDUs of an RLC layer transmitted from a transmitting side through a lower layer. A received data storing module then stores the deciphered PDUs. An RLC header removing module removes headers of the RLC layer from the PDUs. A reassembly module reassembles the PDUs outputted from the RLC header removing module in service data units (SDUs) and then transmits them to an upper layer.

### [First Embodiment]

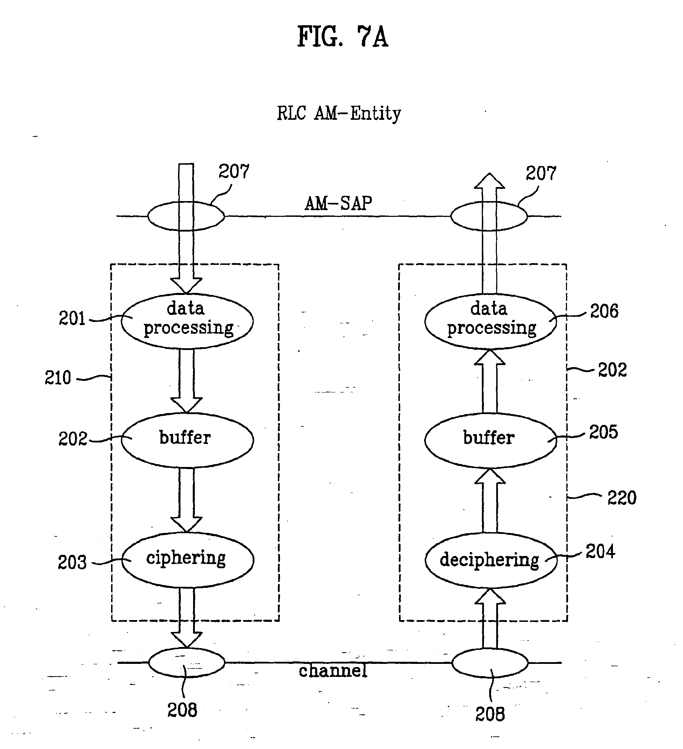

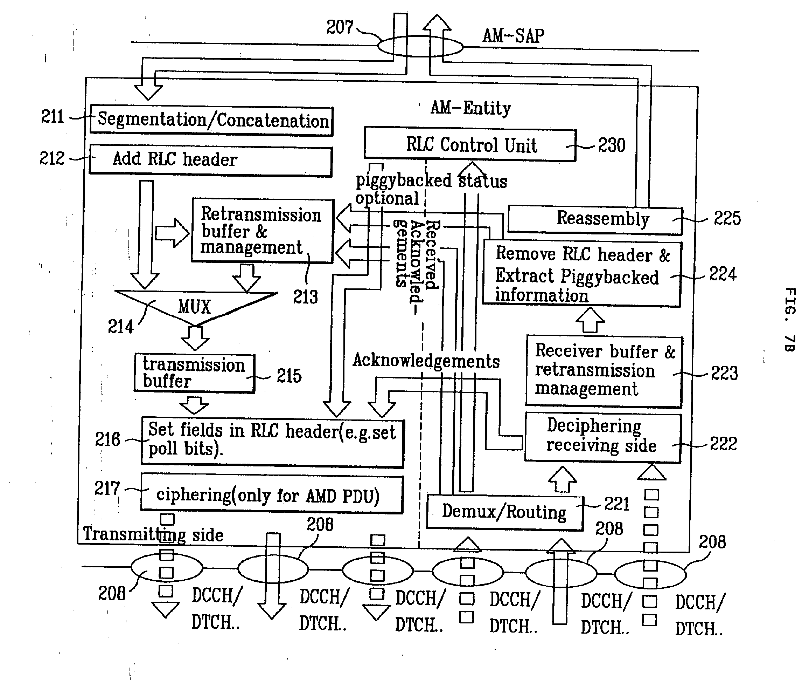

FIG. 7A illustrates a construction of an RLC AM entity according to a first embodiment of the present invention and FIG. 7B illustrates a block diagram of FIG. 7A in detail.

Referring to FIG. 7A, the RLC AM entity of the first embodiment is mainly constructed with a transmission module 210, a receiving module 220, and an RLC control module 230.

The transmission module 210 of the RLC AM entity corresponding to a transmitting side is constructed with a first data processing module 201 converting SDUs transmitted from an upper layer through AM-SAP 207 into PDUs, a transmission data storage module(or transmission buffer) 202 storing the AMD PDUs, and a ciphering module 203 setting the PDUs stored in the transmission buffer 202 as predetermined fields by a control of the RLC control module 230 and ciphering the PDUs. The ciphered PDUs are transmitted to an RLC AM entity corresponding to a receiving side through channels DCCH and DTCH.

The receiving module 220 of the RLC AM entity is constructed with a deciphering module 204 transmitting control PDUs of the ciphered AMD PDUs transmitted through channels DCCH and DTCH from the RLC AM entity corresponding to the transmitting side and deciphering AMD PDUs only, a received data storage module(or receiver buffer) 205 storing the deciphered AMD PDUs, and a second data processing module 206 reassembling the AMD PDUs stored in the received data storage module(or receiver buffer) 205 by SDU unit and then transmitting the AMD PDUs to the upper layer through the AM-SAP 207.

Preferably, the transmission buffer 202 in the RLC AM entity processes the data by SDU unit.

And, the ciphering module 203 of the RLC AM entity checks a D/C field before the PDUs are ciphered. The D/C field check enables AMD PDUs to be ciphered only in the case of data PDUs but control PDUs are not to be ciphered.

If the AMD PDU in the RLC AM entity includes piggybacked status PDU, the piggybacked status PDU is ciphered but status PDU is transmitted without being ciphered.

And, the receiver buffer of the RLC AM entity processes the data by SDU unit.

FIG. 7B illustrates a block diagram of FIG. 7A in detail.

Referring to FIG. 7B, the transmission module 210 of the RLC AM entity is constructed with a segmentation/concatenation module 211 carrying out segmentation and concatenation on SDUs stepping down from an upper layer, an RLC header module 212 forming PDUs by adding sequence numbers SN to the segmented and concatenated SDUs, a retransmission buffer/management module 213 storing the header-added PDUs for retransmission and management, a multiplexer(or multiplexing module) 214 outputting one of output signals of the RLC header module 212 and the retransmission buffer/management module 213, a transmission buffer(or storage module) 215 storing the PDUs outputted from the multiplexer 214 as not ciphered, a set fields block(or set fields module) 216 setting a D/C field and other fields as proper values, and a ciphering module 217 ciphering the PDUs outputted from the set fields block 216 and transmitting the ciphered PDUs to the receiving side.

Preferably, the ciphering module 217 checks header D/C fields of the AMD PDUs before ciphering and then ciphers not control PDU but the AMD PDU including piggybacked status PDU only in accordance with values of the D/C fields.

And, the ciphering module 217 checks the AMD PDUs. If PAD exists in the AMD PDU, the AMD PDUs are replaced by PDUs of the piggybacked status.

Referring to FIG. 7B, the receiving module 220 of the RLC AM entity is constructed with a demultiplexing/routing module 221 transmitting control PDU of PDUs received from the transmission module 210 of other entity to the RLC control unit 230 and AMD PDU to a deciphering block 222, a deciphering module 222 deciphering the AMD PDUs, a receiver buffer 223 storing the deciphered AMD PDUs and outputting the stored PDUs by SDU unit, a header/piggybackedinformation removal module 224 removing the RLC headers and piggybacked information from the PDUs received by the SDU unit, and a reassembly module 225 reassembling the SDUs constructed with the data only and then transmitting them to the upper layer.

Preferably, the demultiplex/routing module 221 of the receiving module 220 checks whether the transmitted PDUs are the control PDU or the AMD PDU through the D/C field check.

And, the receiver buffer 223 transmits the stored PDUs to the upper layer by the SDU unit.

As mentioned in the above description, the first embodiment of the present invention introduces a new RLC AM entity enabling to overcome the problems of the ciphering/deciphering of the related art.

In the RLC AM entity structure, the transmission module 210 of the entity performs the ciphering step as a final stage after the set fields block and the receiving module 220 of the entity performs the deciphering step as an initial stage before the receiver buffer.

In the following, the steps of processing the AMD PDU in the RLC AM entity according to the first embodiment of the present invention are explained in detail by referring to FIG. 7A and FIG. 7B.

As shown in FIG. 7A and FIG. 7B, one logical channel or two may be applied to the RLC AM entity.

When two logical channels are applied, UTRAN enables to instruct that the first logical channel is used for data PDUs and the second logical channel is used for control PDUs.

If the instruction fails to be given by the UTRAN, the data and control PDUs may be sent through one of the two channels, the instruction of the logical channel mapping is signaled by RRC.

In aspect of the transmitting module 210, SDUs stepping downward from the upper layers are segmented and concatenated through the segmentation/concatenation module 211. Namely, the SDUs are segmented and concatenated into/by PDUs having fixed lengths. The length of the PDU is determined in a radio bearer reassembly and a semi-static value changeable through bearer reassembly by RRC.

Subsequently, the SDUs are inputted to the RLC header module 212 where headers including sequence numbers are added to the SDUs so as to form PDUs. The PDUs to which the headers are added are immediately transmitted to the multiplexer 214 and simultaneously stored in the retransmission buffer/management module 213.

For the purpose of concatenation and padding, information bits of the length indicator and extension are inserted -into the initial part of the PDU including the boundaries of the SDUs.

The multiplex 214 outputs one of outputs of the RLC header module 212 and the retransmission buffer/management module 213.

Namely, the multiplexer 214 determines what PDUs are selected and when the PDUs will be transmitted to the MAC. The PDUs are transmitted through the functions of completing the RLC PDU headers and replacing the padding by the piggybacked status information.

The PDUs transmitted through the multiplexer 214 are stored in the transmission buffer 215 as a not-ciphered state, and the PDUs stored in the transmission buffer 215 are then transmitted to the set fields block 216.

In the set fields block 216, the D/C field and other fields are set as proper values and the AMD PDU is replaced by the piggybacked status PDU if PAD exists in the AMD PDU.

Meanwhile, the ciphering module 217 ciphers the AMD PDUs outputted from the set fields block 216 and then transmits the ciphered AMD PDUs toward_another RLC AM entity corresponding to the receiving side.

In this case, before performing the ciphering, the header D/C fields of the AMD PDUs are checked. In accordance with the value of the D/C field, the ciphering is carried out on the AMD PDUs including the piggybacked status PDU only. But, the ciphering is not carried out on the control PDUs such as status, reset, reset acknowledgement PDU(reset ACK PDU).

When the piggybacked mechanism is applied thereto, the padding is replaced by the control information so as to increase transmission efficiency and enable faster message exchange between the peer and peer entities. The piggybacked control information fails to be saved by any retransmission buffer.

The piggybacked control information is included in the piggybacked status PDU, which is subsequently included in the AMD PDU. The piggybacked status PDUs have variable sizes so as to be matched with total amount of free space in the AMD PDU.

The retransmission buffer 213 receives acknowledged signals from the receiving side, instructs the retransmission of the PDUs, and instructs when one PDU is deleted from the retransmission buffer 213.

Meanwhile, the receiving module receives the AMD PDUs through one of the logical channels from the MAC sub-layer.

The RLC PDUs are extended to separated PDUs and potential piggybacked status information is extracted. The PDUs are located in the receiver buffer 205 until a complete SDU is received. The receiver buffer 205 requests retransmission of corresponding PDUs by sending negative acknowledgement signals to the peer entity(or RLC entity corresponding to the transmitting party).

Namely, when the PDUs are received through the foregoing steps from the transmission module 210 of other entity, the demultiplex/routing module 221 of the receiving module 220 judges whether the transmitted PDUs are the control PDUs or the AMD PDUs through the D/C field check.

The demultiplex/routing module 221 transmits the received PDUs, if they are the control PDUs, to the RLC control module 230 or to the deciphering module 222 if they are the AMD PDUs.

In this case, the deciphered AMD PDUs are stored in the receiver buffer/retransmission management module 223. And, the receiver buffer/retransmission management module 223 transmits the received PDUs to the upper module by the SDU unit.

Namely, the header and piggybacked information removal module 224 constructs the SDUs comprising pure data by removing the RLC headers and piggybacked information from the PDUs received by the SDU unit.

After the headers are removed from the PDUs and the PDUs are reassembled into one SDU, the SDUs are transmitted to the upper layer.

Namely, the reassembly module 225 reassembles the PDUs constructed with the-pure data into the SDUs and then transmits the SDUs to the upper layer through the AM-SAP 207.

Meanwhile, the acknowledgement signals are passed to the transmission module of the RLC entity corresponding to the transmitting side.

As mentioned in the above description, in the AM entity of the present invention, the ciphering of the PDUs are performed in the final stage of the transmitting module and the PDUs are deciphered in the initial stage of the receiving module. Therefore, the PDUs are stored in the transmission and receiver buffers as a not-ciphered state. Thus, the transmission and receiver buffers need no deciphering function when storing the PDUs therein. Consequently, the time taken for processing the PDUs in the RLC layers is reduced since the transmission buffer, set fields block, and receiver buffer require not ciphering and deciphering functions.

Moreover, the piggybacked status PDUs having difficulty in processing are processed with ease in the present invention.

Further, as the not-ciphered, i.e. deciphered, PDUs are stored in the receiver buffer, it is able to sufficiently make use of other functions of the RLC processed by the SDU unit. Therefore, data processing speed in the RLC is increased as well as the AM entity enables to operate more stably.

More further, not the control PDU but the AMD PDUs are ciphered only by checking the D/C field when the PDUs are ciphered, thereby enabling to reduce the time taken for processing the PDUs.

First, the ciphering step is arranged as the final processing step in the transmitting module of the entity and the deciphering step is arranged as the initial processing step in the receiving module, thereby enabling to transmit and receive PDUs more efficiently.

Second, the already-deciphered PDUs are stored in the receiver buffer, thereby enabling to transmit AMD PDUs to the upper layer more effectively and faster.

Third, the transmission and receiver buffers require no deciphering function, thereby enabling to reduce data processing time on using other RLC functions carrying out data processing by SDU unit such as SDU discard function.

The forgoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in-the art.

## Claims

1. A transmitting device having an acknowledged mode AM radio link control layer in a radio communication system, comprising:
- means (211) for segmenting and concatenating service data units SDUs received from an upper layer;
- means (212) for adding RLC headers to the segmented and/or concatenated SDUs for forming protocol data units PDUs;
- means (215) for storing the PDUs to which the RLC headers are added;
- means (216) for setting the D/C field, indicating whether a PDU is a data or control PDU, and other fields in the RLC headers of the PDUs received from the PDU storing means; and
- means (217) for ciphering the PDUs output from the fields setting means and then transmitting the result to a lower layer of the transmitting device, the ciphering means (217) being adapted to check D/C fields in the headers of the PDUs and to cipher the PDUs only if they are data PDUs.

2. The transmitting device of claim 1, further comprising:
- means (213) for storing the header-added PDUs for retransmission and management; and
- means (214) for multiplexing the PDUs output from the RLC headers adding means and the PDU storing means for retransmission and management.

3. The transmitting device of claim 1 or 2, wherein the ciphered PDUs are transmitted to the lower layer through at least one of a plurality of channels (208) for transmission, the plurality of channels includes a DTCH and DCCH.

4. The transmitting device of claim 1, wherein the fields setting means are adapted to check the PDUs and to replace the PDUs with piggybacked status PDUs if padding exists in the PDUs.

5. The transmitting device of claim 4, wherein the ciphering means are adapted to cipher the piggybacked status PDUs .

6. The transmitting device of any one of the claims 1 to 5, wherein service data units SDUs are received from an upper layer through an acknowledged mode service access point AM-SAP.

7. A method of transmitting data in a radio communication system by a transmitting device having an acknowledged mode AM radio link control layer, comprising:
segmenting and concatenating service data units SDUs received from an upper layer;
adding RLC headers to the segmented and/or concatenated SDUs for forming protocol data units PDUs;
- storing the PDUs to which the RLC headers are added in a transmission buffer;
setting the D/C field, indicating whether a PDU is a data or control PDU, and other fields in the RLC headers of the PDUs;
- checking D/C fields in the headers of the PDUs; and
ciphering the PDUs only if the PDUs are data PDUs and then transmitting the result to a lower layer of the transmitting device.

8. The method of claim 7, further comprising:
storing the RLC header-added PDUs for retransmission and management in a retransmission buffer; and
multiplexing the PDUs output from RLC headers means and the retransmission buffer.

9. The method of claim 7 or 8, wherein ciphered PDUs are transmitted through at least one of a plurality of channels for transmission, the plurality of channels includes a DTCH and DCCH.

10. The method of claim 7, further comprising replacing the PDUs with piggybacked status PDUs if padding exists in the PDUs.

11. The method of claim 10, wherein the piggybacked status PDUs are ciphered at the step of ciphering the PDUs.

12. The method of any one of the claims 7 to 11, wherein service data units SDUs are received from an upper layer through an acknowledged mode service access point AM-SAP.

## Patentansprüche

1. Übertragungsvorrichtung, die eine Quittierungsbetriebsart-Funkverbindungssteuerungsschicht, AM-Funkverbindungssteuerungsschicht, besitzt, in einem Funkkommunikationssystem, die umfasst:
Mittel (211), um Dienstdateneinheiten, SDUs, die von einer oberen Schicht empfangen werden, zu segmentieren und zu verknüpfen;
Mittel (212), um RLC-Kopfsätze zu den segmentierten und/oder verknüpften SDUs hinzuzufügen, um Protokolldateneinheiten, PDUs, zu bilden;
Mittel (215), um die PDUs, zu denen die RLC-Kopfsätze hinzugefügt sind, zu speichern;
Mittel (216), um das D/C-Feld, das angibt, ob eine PDU eine Daten-PDU oder eine Steuer-PDU ist, und andere Felder in den RLC-Kopfsätzen der PDUs, die von den PDU-Speichermitteln empfangen werden, zu setzen; und
Mittel (217), um die PDUs, die von den Felder-Setzmitteln ausgegeben werden, zu verschlüsseln und um dann das Ergebnis zu einer unteren Schicht der Übertragungsvorrichtung zu senden, wobei die Verschlüsselungsmittel (217) dazu ausgelegt sind, D/C-Felder in den Kopfsätzen der PDUs zu prüfen und die PDUs nur dann zu verschlüsseln, wenn sie Daten-PDUs sind.

2. Übertragungsvorrichtung nach Anspruch 1, die ferner umfasst:
Mittel (213), um die PDUs, zu denen Kopfsätze hinzugefügt sind, für eine erneute Übertragung und für das Management zu speichern; und
Mittel (214), um die PDUs, die von den RLC-Kopfsatz-Hinzufügungsmitteln ausgegeben werden, und die PDUs, die von den PDU-Speichermitteln ausgegeben werden, für eine erneute Übertragung und für das Management zu multiplexieren.

3. Übertragungsvorrichtung nach Anspruch 1 oder 2, wobei die verschlüsselten PDUs zu der unteren Schicht durch wenigstens einen von mehreren Übertragungskanälen (208) übertragen werden, wobei die mehreren Kanäle einen DTCH und einen DCCH enthalten.

4. Übertragungsvorrichtung nach Anspruch 1, wobei die Felder-Setzmittel dazu ausgelegt sind, die PDUs zu prüfen und die PDUs durch PDUs mit Huckepackstatus zu ersetzen, wenn in den PDUs eine Füllzeichenhinzufügung existiert.

5. Übertragungsvorrichtung nach Anspruch 4, wobei die Verschlüsselungsmittel dazu ausgelegt sind, die PDUs mit Huckepackstatus zu verschlüsseln.

6. Übertragungsvorrichtung nach einem der Ansprüche 1 bis 5, wobei Dienstdateneinheiten, SDUs von einer oberen Schicht durch einen Quittierungsbetriebsart-Dienstzugriffspunkt, AM-SAP, empfangen werden.

7. Verfahren zum Übertragen von Daten in einem Funkkommunikationssystem durch eine Übertragungsvorrichtung, die eine Quittierungsbetriebsart-Funkverbindungssteuerschicht, AM-Funkverbindungssteuerschicht, besitzt, das umfasst:
- Segmentieren und Verknüpfen von Dienstdateneinheiten, SDUs, die von einer oberen Schicht empfangen werden;
- Addieren von RLC-Kopfsätzen zu den segmentierten und/oder verknüpften SDUs, um Protokolldateneinheiten, PDUs, zu bilden;
- Speichern der PDUs, zu denen die RLC-Kopfsätze hinzugefügt worden sind, in einem Sendepuffer;
- Setzen des D/C-Feldes, das angibt, ob eine PDU eine Daten-PDU oder eine Steuer-PDU ist, und anderer Felder in den RLC-Kopfsätzen der PDUs;
- Prüfen der D/C-Felder in den Kopfsätzen der PDUs; und
- Verschlüsseln der PDUs nur dann, wenn die PDUs Daten-PDUs sind, und dann Senden des Ergebnisses zu einer unteren Schicht der Übertragungsvorrichtung.

8. Verfahren nach Anspruch 7, das ferner umfasst:
- Speichern der PDUs, zu denen RLC-Kopfsätze hinzugefügt worden sind, für eine erneute Übertragung und für das Management in einem Neuübertragungspuffer; und
- Multiplexieren der von den RLC-Kopfsatzmitteln und der von dem Neuübertragungspuffer ausgegebenen PDUs.

9. Verfahren nach Anspruch 7 oder 8, wobei die verschlüsselten PDUs durch wenigstens einen von mehreren Übertragungskanälen übertragen werden, wobei die mehreren Kanäle einen DTCH und einen DCCH umfassen.

10. Verfahren nach Anspruch 7, das ferner das Ersetzen der PDUs durch PDUs mit Huckepackstatus umfasst, falls in den PDUs eine Füllzeichenhinzufügung existiert.

11. Verfahren nach Anspruch 10, wobei die PDUs mit Huckepackstatus in dem Schritt des Verschlüsselns der PDUs verschlüsselt werden.

12. Verfahren nach einem der Ansprüche 7 bis 11, wobei Dienstdateneinheiten, SDUs, von einer oberen Schicht durch einen Quittierungsbetriebsart-Dienstzugriffspunkt, AM-SAP, empfangen werden.

## Revendications

1. Dispositif d'émission ayant une couche de commande de liaison radio (RLC) à mode acquitté (AM) dans un système de communication radio, comprenant:
des moyens (211) pour segmenter et concaténer des unités de données de service (SDU) reçues d'une couche supérieure;
des moyens (212) pour ajouter des en-têtes RLC aux unités SDU segmentées et/ou concaténées pour former des unités de données de protocole (PDU);
des moyens (215) pour stocker les unités PDU auxquelles les en-têtes RLC sont ajoutés;
des moyens (216) pour régler le champ D/C, indiquant si une unité PDU est une unité PDU de données ou de commande, et d'autres champs dans les en-têtes RLC des unités PDU reçues en provenance des moyens de stockage d'unités PDU; et
des moyens (217) pour crypter les unités PDU délivrées par les moyens de réglage de champs et ensuite transmettre le résultat à une couche inférieure du dispositif d'émission, les moyens de cryptage (217) étant aptes à vérifier des champs D/C dans les en-têtes des unités PDU et à crypter les unités PDU seulement s'il s'agit d'unités PDU de données.

2. Dispositif d'émission selon la revendication 1, comprenant en outre:
des moyens (213) pour stocker les unités PDU à en-têtes ajoutés dans un but de retransmission et de gestion; et
des moyens (214) pour multiplexer les unités PDU délivrées par les moyens d'ajout d'en-têtes RLC et les moyens de stockage d'unités PDU dans un but de retransmission et de gestion.

3. Dispositif d'émission selon la revendication 1 ou 2, dans lequel les unités PDU cryptées sont transmises à la couche inférieure par au moins un d'une pluralité de canaux (208) de transmission, la pluralité de canaux comprenant un canal DTCH et un canal DCCH.

4. Dispositif d'émission selon la revendication 1, dans lequel les moyens de réglage de champs sont aptes à vérifier les unités PDU et à remplacer les unités PDU par des unités PDU à superposition d'état si un bourrage existe dans les unités PDU.

5. Dispositif d'émission selon la revendication 4, dans lequel les moyens de cryptage sont aptes à crypter les unités PDU à superposition d'état.

6. Dispositif d'émission selon l'une quelconque des revendications 1 à 5, dans lequel des unités de données de service (SDU) sont reçues d'une couche supérieure par l'intermédiaire d'un point d'accès de service à mode acquitté (AM-SAP).

7. Procédé de transmission de données dans un système de communication radio par un dispositif d'émission ayant une couche de commande de liaison radio (RLC) à mode acquitté (AM), comprenant:
la segmentation et la concaténation d'unités de données de service (SDU) reçues d'une couche supérieure;
l'ajout d'en-têtes RLC aux unités SDU segmentées et/ou concaténées pour former des unités de données de protocole (PDU);
le stockage des unités PDU auxquelles les en-têtes RLC sont ajoutés dans un tampon d'émission;
le réglage du champ D/C, indiquant si une unité PDU est une unité PDU de données ou de commande, et d'autres champs dans les en-têtes RLC des unités PDU;
la vérification des champs D/C dans les en-têtes des unités PDU; et
le cryptage des unités PDU seulement si les unités PDU sont des unités PDU de données puis la transmission du résultat à une couche inférieure du dispositif d'émission.

8. Procédé selon la revendication 7, comprenant en outre:
le stockage des unités PDU à en-têtes RLC ajoutés dans un but de retransmission et de gestion dans un tampon de retransmission; et
le multiplexage des unités PDU délivrées par des moyens d'ajout d'en-têtes RLC et le tampon de retransmission.

9. Procédé selon la revendication 7 ou 8, dans lequel des unités PDU cryptées sont transmises par au moins un d'une pluralité de canaux de transmission, la pluralité de canaux comprenant un canal DTCH et un canal DCCH.

10. Procédé selon la revendication 7, comprenant en outre le remplacement des unités PDU par des unités PDU à superposition d'état si un bourrage existe dans les unités PDU.

11. Procédé selon la revendication 10, dans lequel les unités PDU à superposition d'état sont cryptées à l'étape de cryptage des unités PDU.

12. Procédé selon l'une quelconque des revendications 7 à 11, dans lequel des unités de données de service (SDU) sont reçues d'une couche supérieure par l'intermédiaire d'un point d'accès de service à mode acquitté (AM-SAP).
